# EUROPÄISCHE PATENTANMELDUNG

(11) **EP 1 280 327 A1**
(43) Veröffentlichungstag der Anmeldung: **29.01.2003**
(21) Anmeldenummer: 01117703.7
(22) Anmeldetag: 26.07.2001
(51) Int. Cl.: H04M 3/56, H04M 3/42, H04L 12/16, H04M 7/00

(54) **Verfahren zur Realisierung eines Telekommunikationsdienstes in einem mindestens ein erstes und ein zweites Telekommunikationsendgerät verbindenden intelligenten Kommunikationsnetz und Kommunikationssystem zur Durchführung eines solchen Verfahrens**

(71) Anmelder: SIEMENS AKTIENGESELLSCHAFT, 80333 München (DE)
(72) Erfinder: Barthel, Tania, 82223 Eichenau (DE); Davutoglu, Can, 1100 Wien (AT); Moritz, Peter, 85540 Haar (DE); Pfoertner, Thomas, 85635 Hoehenkirchen (DE)

(57) **Zusammenfassung**

Die Erfindung betrifft ein Verfahren zur Realisierung eines Telekommunikationsdienstes in einem mindestens ein erstes und ein zweites Telekommunikationsendgerät (1, 3) verbindendes intelligentes Kommunikationsnetz (IN) (2), mit einer steuernden Dienstezentrale (4), wobei der Telekommunikationsdienst eine erste Verbindung und eine zweite von dem ersten und/oder weiteren Telekommunikationsendgerät angeforderte Verbindung aufbaut (S8), nachdem die ersten Verbindung abgebaut wurde. Ein Telekommunikationssystem zur Durchführung des Verfahrens wird gezeigt.

## Beschreibung

Verfahren zur Realisierung eines Telekommunikationsdienstes in einem mindestens ein erstes und ein zweites Telekommunikationsendgerät verbindenden intelligenten Kommunikationsnetz und Verfahren zur Durchführung in einem Kommunikationssystem

Die Erfindung betrifft ein Verfahren zur Realisierung eines Telekommunikationsdienstes in einem intelligenten Kommunikationsnetz (IN) gemäß dem Oberbegriff des Patentanspruches 1 und ein Telekommunikationssystem zur Durchführung des Verfahrens gemäß dem Oberbegriff des Patentanspruches 10.

Telekommunikationsdienste in Kommunikationsnetzen sind neben den Grundleistungen, wie der Übertragung von Daten, auch weitere von dem Netz angebotene Leistungen. Bekannte Dienste sind beispielsweise die Möglichkeit, bestimmte Rufnummern für Dienstbenutzer zur Verfügung zu stellen, deren Benutzung eine unterschiedliche Vergebührung zur Folge hat, sowie Virtual Private Network (VPN) oder Universal Personal Telecommunications (UPT).

In öffentlichen Netzen können diese Dienste in speziellen zentralisierten Einrichtungen - wie leistungsfähigen Computern - implementiert werden. Die Änderung bestehender und die Einführung neuer Dienste werden so nur an zentralisierten Steuerungspunkten vorgenommen. Ein Beispiel für eine derartige zentralisierte Dienstesteuerung ist das intelligente Netz (Intelligent Network, IN), welches in seiner Grundarchitektur von ETSI (European Telecomunication Standards Institute) und ITU-T (International Telecomunications Union) gemäß der Q.1200-Serie standardisiert worden ist.

Der Grundgedanke des intelligenten Netzes ist die Trennung von Vermittlungsfunktionen und Dienstfunktionen. Die Mechanismen, die eine Verbindung aufbauen, liegen nicht mehr vollständig in der einzelnen Vermittlungsstelle, sondern sind zentralisiert in einem leistungsfähigen Computer, auch Dienstzentrale genannt, von wo aus sie leicht geändert werden können. Von hier aus werden entsprechende Daten zu lokalen Vermittlungsstellen weitergegeben, die dort den weiteren Verbindungsaufbau steuern.

Bisher konnten neue Dienste für Teilnehmer nur angeboten werden, sobald die lokale Vermittlung des Teilnehmers dafür umgerüstet war. Dies führte zu teuren Umrüstungsverfahren und zu langen Vorlaufzeiten bei der Einführung neuer Dienste. Bei der Lösung der zentralisierten Steuerung der Änderung und/oder Einführung von Diensten hingegen ist ein Nachrüsten der einzelnen Vermittlungsstellen nicht mehr notwendig.

Wird innerhalb eines intelligenten Netzes ein Telekommunikationsdienst aufgerufen, so wird der Aufruf mittels eines Verbindungswunsches eines Teilnehmers des Netzes durchgeführt. Hierfür wird von dem Teilnehmer eine Dienstenummer, z.B. ein IN-Präfix ("01") und eine Dienstekennzahl ("80") gewählt. Eine IN-fähige Vermittlungsstelle (SSP, Service Switching Point) kann das Vorliegen eines IN-Dienstes anhand der gewählten Ziffernfolge "0180" durch Vergleich mit dem Inhalt einer diensteübergreifenden sogenannten Trigger-Tabelle erkennen. Der Inhalt der Trigger-Tabelle ist vom Netzbetreiber vorgegeben und änderbar. Als Trigger können hierfür neben der Wahl der Dienstenummer auch Verbindungszustände, wie beispielsweise "besetzt", "keine Antwort" und "abheben", fungieren.

Sofern die Vermittlungsstelle nicht für den Gebrauch in intelligenten Netzen ausgelegt ist, wird durch einen vorbestimmten Verbindungsleitweg eine Verbindung zu einer ihr zugewiesenen IN-Vermittlungsstelle aufgebaut und die gewählte Ziffernfolge als Parameter an diese übertragen.

Sobald das Vorliegen eines IN-Dienstes in der Vermittlungsstelle erkannt worden ist, beginnt der anhand der IN-Dienstekennzahl ausgewählte Dienst in Abhängigkeit von einem ihm zugeordneten Anwendungsprogramm abzulaufen, welches mittels der Trigger-Tabelle ausgewählt wird. Der Dienst wird durch das Anwendungsprogramm in einer Dienstezentrale (SCP, Service Control Point) realisiert und steuert die weitere Behandlung des Anrufs. Dieser Ablauf wird in der ITU-T Recommendation Q.1214 beschrieben.

Ein möglicher Ablauf des Telekommunikationsdienstes kann die Ansage einer Ansageeinrichtung des IN sein, die beispielsweise in einem Intelligent Peripheral (IP), die dem Teilnehmer ein Management des Dienstes erlaubt, angeordnet ist. Der Teilnehmer kann dann unter Inanspruchnahme eines Softwaremenüs die von ihm gewünschten Informationen von der Ansageeinrichtung gezielt abfragen. Außerdem kann die Intelligent Peripheral den Wunsch des Teilnehmers, der ein erstes anrufendes Endgerät benutzt, entgegennehmen, eine Verbindung zu einem zweiten Endgerät aufzubauen. Der daraufhin mittels des Telekommunikationsdienstes angerufene Teilnehmer, welcher das zweite Endgerät benutzt, kann jedoch nicht einen Wechsel der Verbindung unter Inanspruchnahme des Dienstes erreichen.

Demzufolge liegt der vorliegenden Erfindung die Aufgabe zugrunde, ein Verfahren zur Realisierung eines IN-Telekommunikationsdienstes anzugeben, welcher auch ohne den Anruf eines Dienstenutzers initiiert wird und jedem den IN-Dienst in Anspruch nehmenden Endgerät den Wechsel einer Verbindung erlaubt.

Diese Aufgabe wird verfahrensseitig gemäß den Merkmalen des Anspruches 1 und vorrichtungsseitig gemäß den Merkmalen des Anspruches 10 gelöst.

Ein wesentlicher Punkt der Erfindung liegt darin, daß der Telekommunikationsdienst durch ein erstes Telekommunikationsendgerät in der Dienstezentrale zunächst aktiviert und anschließend durch einen selbsttätig durchgeführten Datenvergleich ohne Zutun des ersten Endgerätes gestartet wird. Dann wird bei einem von dem Dienst durchgeführten Anruf mindestens eine erste Verbindung mit dem intelligenten Netzes aufgebaut, welche ein das Endgerät benutzender Teilnehmer auf eigenen Wunsch hin wieder abbauen kann, um eine zweite Verbindung aufgebaut zu bekommen.

Demzufolge ist es nicht notwendig, den Dienst innerhalb des intelligenten Netzes, welcher dem ersten und den weiteren Endgeräten eine Ansagenachricht zukommen läßt, durch einen Anruf des Endgerätes zu starten. Vielmehr führt der Dienst automatisch nach seiner Aktivierung durch das erste Endgerät den Ansagemodus mittels eines Anwendungsprogrammes (auch IN Service Logic genannt) nach einem selbsttätigen Start aufgrund eines zuvor durchgeführten Datenvergleichs durch.

Die erste Verbindung wird vorzugsweise zwischen einer Ansageeinrichtung oder einer weiteren Kommunikationseinrichtung des intelligenten Netzes und dem ersten und/oder mindestens einem weiteren Endgerät aufgebaut, wohingegen die zweite Verbindung zwischen dem ersten und/oder weiteren Endgerät und einem zweiten und/oder weiteren Endgerät aufgebaut wird. Hierbei kann das zweite und/oder weitere Endgerät ebenso als eine andere Form von Telekommunikationseinrichtung, wie beispielsweise eine Telekommunikationsanlage oder eine ein Call Center darstellende Einrichtung ausgebildet sein.

Für einen derart selbsttätigen Start des Dienstes wird gemäß einer bevorzugten Ausführungsform das Anwendungsprogramm durch einen Trigger ausgelöst, der in Form einer "virtuellen Rufnummer", die zunächst von der Zentrale generiert wird und an einen Diensteanbieter innerhalb des intelligenten Netzes übertragen wird, ausgelöst bzw. gestartet. Diese "virtuelle Rufnummer" dient dafür, in einer IN-fähigen Vermittlungsstelle (SSP) als Diensteaufruf erkannt zu werden und von der SSP an die Dienstezentrale (SCP) zur Ausführung des Anwendungsprogrammes weitergeleitet zu werden. Die "virtuelle Rufnummer" kann beispielsweise dann an die Vermittlungsstelle gesendet werden, wenn ein Datenvergleich zu einem positiven Ergebnis führt. Auf diese Weise ist ein Start des Dienstes, welcher bisher durch einen Verbindungsaufbauwunsch des ersten Endgerätes initiiert wurde, durch ein andersartiges Ereignis möglich.

Bei der Aktivierung des Telekommunikationsdienstes werden von dem ersten Endgerät, dessen Benutzer später als einer der Dienstenutzer auftritt, Referenzdaten eingegeben. Die Referenzdaten spalten sich in Verbindungsdaten und Inhaltsdaten auf. Die Verbindungsdaten umfassen hierbei beispielsweise die Telefonrufnummern der mittels des Dienstes anzurufenden Endgeräte, wohingegen die Inhaltsdaten diejenigen Daten enthalten, die in dem später durchzuführenden Datenvergleich mit Daten, die von dem zweiten Endgerät übertragen werden, verglichen werden. Von dem Vergleichsergebnis wird der Start des Dienstes abhängig gemacht. Zusätzlich zu diesen Daten werden Parameter eingegeben, wie beispielsweise Eingabeformate, Zeitangaben und Bedingungen, die einen Start des Dienstes verhindern sollen. Ebenso können mehrere Rufnummern der verschiedenen Endgeräte desjenigen Teilnehmers, der zu Anfang über das erste Endgerät den Dienst aktiviert hat, eingegeben werden. Dies sichert die Erreichbarkeit des Teilnehmers bei einem später durchzuführenden Anruf mittels des Dienstes.

Das in der Dienstezentrale angeordnete Anwendungsprogramm ruft nach dem Starten des Dienstes das erste und weitere Endgeräte an, um mit diesen eine erste Verbindung zu einer Ansageeinrichtung des intelligenten Netzes aufzubauen, die beispielsweise in einem Intelligent Peripheral ausgebildet sein kann. Die Teilnehmer werden - nachdem sie eine vorbestimmte Ansagenachricht, die auf den Vergleichsergebnissen basiert, erhalten haben - von der Dienstezentrale über das IP aufgefordert, eine erste Nachricht über den gewünschten Aufbau der zweiten Verbindung mit dem zweiten Endgerät an die Dienstezentrale zu senden. Auf diese Weise können sie einen Wechsel der Verbindung, die zuvor mit der Ansageeinrichtung bestand, initiieren. Die Dienstezentrale veranlaßt daraufhin den Abbau der ersten Verbindung und den Aufbau der zweiten Verbindung zwischen dem ersten und weiteren Endgeräten einerseits und dem zweiten Endgerät andererseits über die Vermittlungseinrichtung.

Eine zweite Nachricht, die Anforderungssignale zum Anfordern der übertragenen Daten und/oder der Vergleichsergebnisse oder weiterer Daten beinhaltet, wird von dem ersten und/oder weiteren Telekommunikationsendgerät an die Dienstezentrale gesendet. Mittels dieser zweiten Nachricht, die zeitlich gesehen auch vor der ersten Nachricht gesendet werden kann, hat ein Dienstenutzer die Möglichkeit, beispielsweise Stornierungsdaten abzufragen, die notwendig sind, um den Flug zu stornieren.

Gemäß einer bevorzugten Ausführungsform können die Nachrichten über den gewünschten Aufbau der zweiten Verbindung mittels eines Sprachspeichersystems, wie Interactive Voice Response (IVR), durch die Dienstezentrale abgefragt werden. Die Benutzer der Endgeräte können dann durch Tastendruck auf einfache Weise die Nachricht an die Dienstezentrale signalisieren.

Ein Telekommunikationssystem mit einer Dienstezentrale in einem intelligenten Kommunikationsnetz (IN) weist vorteilhafter Weise zur Durchführung des Verfahrens eine erste Speichereinrichtung zur Speicherung des Anwendungsprogrammes, eine zweite Speichereinrichtung zur Speicherung von Referenzdaten und weiteren Aktivierungsdaten, eine Vergleichseinrichtung zum Vergleich der in den Referenzdaten enthalteneen Inhaltsdaten mit den übertragenen Daten und Einrichtungen zum Auf- und Abbau der ersten bzw. zweiten Verbindung auf.

Weitere Ausführungsformen ergeben sich aus den Unteransprüchen.

Zusätzliche Vorteile und Zweckmäßigkeiten können der nachfolgenden Beschreibung im Zusammenhang mit der Zeichnung entnommen werden. Hierbei zeigen:
Fig. 1 eine schematische Darstellung des Verfahrens unter Einbeziehung von Vorrichtungsaspekten, und
Fig. 2a und 2b ein Ablaufdiagramm einer Ausführungsform des Verfahrens.

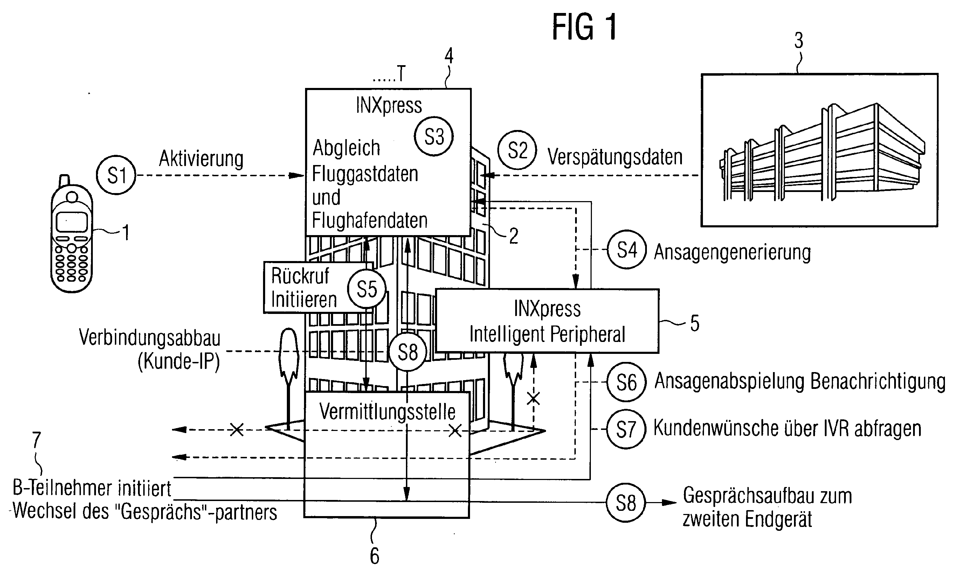

Fig. 1 zeigt ein Kommunikationsnetz IN, welches über die Möglichkeit der Realisierung von zentralisiert angebotenen Diensten verfügt. Ein erstes Endgerät 1 ist ebenso wie ein zweites Endgerät 3 mit einem intelligenten Netz 2 über eine Dienstezentrale 4 (SCP) verbunden. In der Dienstezentrale 4 ist das Anwendungsprogramm eingerichtet, welches die Service Logic des Dienstes darstellt.

Über ein Intelligent Peripheral 5 ist eine Ansageeinrichtung des IN mit der Dienstezentrale 4 und einer Vermittlungsstelle 6 (SSP), die für intelligente Netze ausgelegt ist, verbunden. Über die Vermittlungsstelle 6 sind weitere Endgeräte 7 mit dem intelligenten Netz verbunden.

In einem ersten Schritt S1 aktiviert der Teilnehmer, welcher das erste Endgerät 1 benutzt, den Dienst in der Dienstezentrale 4 durch Übermittlung von Referenzdaten. Die Referenzdaten umfassen Verbindungsdaten über diejenigen Verbindungen, über welche Informationen, insbesondere Ansagenachrichten, versendet werden sollen und Inhaltsdaten, die für einen Datenvergleich hergenommen werden. Die Dienstezentrale 4 erhält somit die notwendigen Daten zur späteren Ausführung der Dienste, wie beispielsweise die Telefonnummern des aktivierenden Teilnehmers und weitere Telefonnummern weiterer Teilnehmer, um deren Endgeräte später anzurufen. Die Telefonnummern zählen zu den Verbindungsdaten. Demgegenüber zählen zu den Inhaltsdaten die zu vergleichenden Daten, aufgrund deren Vergleichsergebnis ein Starten des Telekommunikationsdienstes stattfindet.

Aus diesen Daten generiert die Dienstezentrale 4 eine "virtuelle Rufnummer" als Trigger, die zum Starten des Dienstes dient. Diese virtuelle Rufnummer wird nun einem hier nicht gezeigten Diensteanbieter oder einer geeigneten anderen Kommunikationseinrichtung zugesandt, die in Verbindung mit dem zweiten Endgerät 3 stehen kann. Alternativ können in einem Abfragemodus Daten von dem zweiten Endgerät mittels der Dienstezentrale 4 abgefragt (Schritt S2) und bei Vorliegen sämtlicher relevanter Daten der eigentliche Telekommunikationsdienst gestartet werden.

Nach Vorliegen der übertragenen Daten werden in einem Schritt S3 diese mit den Inhaltsdaten verglichen, die bei dem Aktivierungsvorgang eingegeben wurden. Sofern die durch den Dienst vorbestimmten Vergleichsergebnisse vorliegen, wird in einem Schritt S4 eine Ansagenachricht durch die Dienstezentrale generiert und in einem Schritt S6 über die Ansageeinrichtung und die Vermittlungsstelle 6 an die anzurufenden Endgeräte übertragen. Hierfür erfolgt ein durch die Dienstezentrale 4 gesteuerter Anruf zu jedem der Endgeräte 7 (Schritt S5).

Mit der Ansagenachricht werden die Teilnehmer der Endgeräte 7 dazu aufgefordert, anzugeben, ob sie den Wechsel dieser ersten Verbindung mit der Ansageeinrichtung wünschen. Sofern die die Endgeräte 7 benutzenden Teilnehmer dies in einem IVR-Verfahren beispielsweise durch einen Tastendruck bejahen (Schritt S7) wird die erste Verbindung mit der Ansageeinrichtung abgebaut und eine zweite Verbindung zu dem Endgerät 3 durch die Vermittlungsstelle 6 und die Dienstezentrale 4 aufgebaut (Schritt S8).

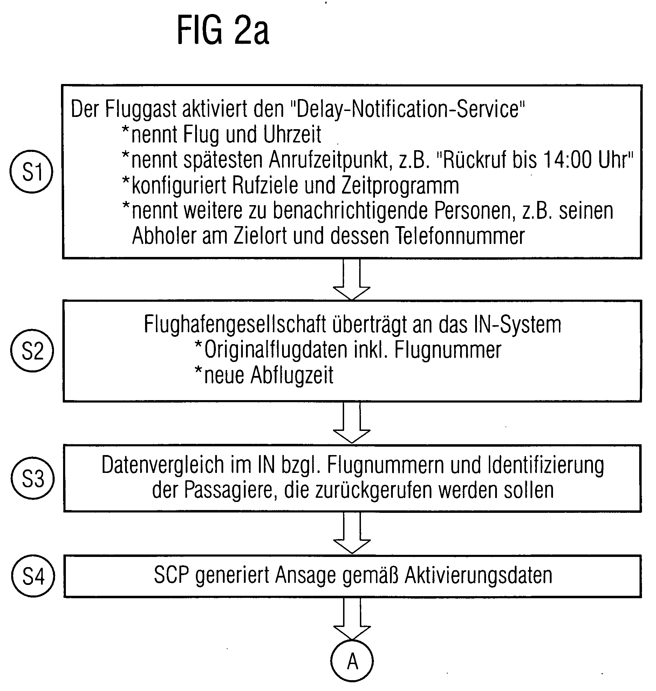

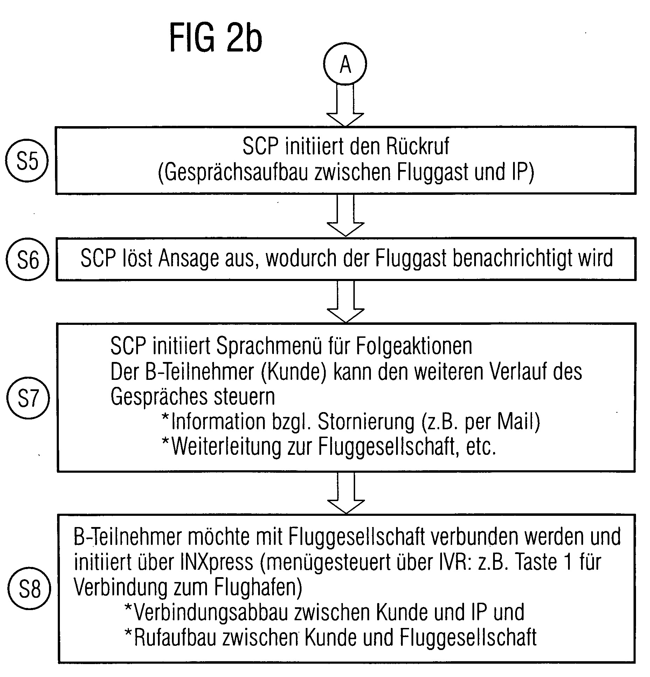

Die Figuren 2a und 2b zeigen das Ablaufdiagramm einer Ausführungsform des erfindungsgemäßen Verfahrens am Beispiel eines Informationsdienstes für Fluggäste. Dieser Informationsdienst für Fluggäste soll bei Verspätungen informieren. Der Fluggast aktiviert hierfür einen "Delay Notification Service" in der Dienstezentrale (Schritt S1) indem er eine Flugnummer, das Datum und die Uhrzeit des Abfluges an die Dienstezentrale als Inhaltsdaten überträgt. Weiterhin nennt er den spätesten Anrufzeitpunkt beispielsweise durch Eingabe von "Rückruf bis 14:00 Uhr". Er konfiguriert zusätzlich Rufziele als Verbindungsdaten, die beispielsweise eine Person, die ihn am Ankunftsort abholen soll, mit einem Endgerät sein kann. Zudem kann er weitere Rufnummern von zusätzlichen Endgeräten angeben, die ihm gehören.

In einem Schritt S2 übermittelt ein Call Center einer Flughafengesellschaft die ursprüngichen Flugdaten einschließlich der Flugnummer sowie die neuen Abflugzeiten nach Bekanntgabe einer Verspätung an das intelligente Netz. In einem Schritt S3 findet in der Dienstezentrale ein Datenvergleich bezüglich der Flugnummern und der Identifizierung der Passagiere, die zurückgerufen werden sollen, statt. Bei einem derartigen Datenvergleich wird zunächst innerhalb der Dienstezentrale geprüft, ob eine Anfrage von Seiten des Teilnehmers, der das erste Endgerät benutzt, zu der bestimmten Flugnummer vorliegt. Sofern diese Überprüfung bejaht wird, wird auf eine Speichertabelle zugegriffen, die als Inhaltsdaten die Flugzeiten, welche der jeweiligen Flugnummer zugeordnet sind, beinhaltet. Wenn ein Vergleich dieser Flugzeiten zu der Feststellung führt, daß eine Verspätung des Fluges außerhalb eines vorbestimmten Zeitrahmens vorliegt, wird auf sämtliche Rufnummern zugegriffen, die zuvor der Teilnehmer während des Aktivierungsvorganges als Verbindungsdaten übertragen hat. Daraufhin generiert die Dienstezentrale in einem Schritt S4 eine Ansagenachricht, deren Inhalt über die Verspätung des Abfluges jeder dieser Rufnummern zugeleitet werden soll.

In einem Schritt S5 initiiert die Dienstezentrale Anrufe zu dem Endgerät des Fluggastes und Endgeräten weiterer Teilnehmer, indem eine Verbindung zwischen dem Intelligent Peripheral, in welcher die Ansageeinrichtung angeordnet ist, und den Endgeräten aufbaut.

Anschließend startet die Dienstezentrale in einem Schritt S6 den Sendevorgang für das Absenden der Ansagenachricht an den Fluggast und weiteren Teilnehmern.

In einem Schritt S7 initiiert die Dienstezentrale mittels eines Software-Menüs ein Sprachspeichersystem (IVR), das den weiteren Teilnehmern als auch dem Fluggast über einen Abfragemodus die Möglichkeit gibt, weitere Informationen für eine Stornierung des Fluges, beispielsweise per E-Mail zugesandt zu bekommen. Weiterhin werden die Teilnehmer der weiteren Endgeräte dazu aufgefordert, eine Nachricht über einen gewünschten Aufbau einer zweiten Verbindung zwischen den Endgeräten des Fluggastes bzw. der weiteren Teilnehmer und dem Call Center der Fluggesellschaft an die Dienstezentrale zu senden. Sofern die weiteren Teilnehmer einen derartigen Verbindungsaufbauwunsch als Nachricht an die Dienstezentrale gesendet haben, wird auf einen in der Dienstezentrale angeordneten Speicherbereich zugegriffen, der verschiedene Rufnummern beinhaltet. Es erfolgt dann in Abhängigkeit von dem jeweiligen Teilnehmer, der einen derartigen Verbindungsaufbauwunsch äußert, das Zusammensetzen eines Rufnummerndatensatzes, der unter anderem auch die Rufnummer der Auskunft der Deutschen Bahn enthalten kann, die als Ersatzverbindung für die verspätete Flugverbindung dienen kann. Sofern sich die Teilnehmer bei der mittels des Softwaremenüs INXpress durchgeführten Auswahl für eine zweite Verbindung zu der Fluggesellschaft entscheiden, wird in einem Schritt S8 diese Verbindung mittels INXpress aufgebaut. Zudem wird ein Abbau der ersten Verbindung zwischen den Endgeräten der Teilnehmer und der Intelligent Peripheral durchgeführ. Die Teilnehmer können somit selbsttätig einen Wechsel der Verbindungen initiieren.

Sämtliche in den Anmeldeunterlagen offenbarten Merkmale werden als erfindungswesentlich beansprucht, soweit sie einzeln oder in Kombination gegenüber dem Stand der Technik neu sind.

## Patentansprüche

1. Verfahren zur Realisierung eines Telekommunikationsdienstes in einem mindestens ein erstes und ein zweites Telekommunikationsendgerät (1, 3) verbindenden intelligenten Kommunikationsnetz (IN) (2), mit einer steuernden Dienstezentrale (4) **gekennzeichnet**
**durch** die Schritte:
Aktivierung (S1) des Telekommunikationsdienstes in der Dienstezentrale (4) durch das erste Telekommunikationsendgerät (1), und
Starten des Telekommunikationsdienstes durch sich aus einem Datenvergleich (S3) ergebenden Vergleichsergebnissen, wobei der Datenvergleich zwischen in der Dienstezentrale (4) gespeicherten Referenzdaten, die während der Aktivierung vom ersten Telekommunikationsgerät (1) übertragen werden und von dem zweiten Endgerät (2) übertragenen Daten (S2) stattfindet, wobei der Telekommunikationsdienst eine erste Verbindung und eine zweite von mindestens einem Teilnehmer des ersten und/oder weiteren Telekommunikationsendgerätes (17) angeforderte Verbindung aufbaut (S8), nachdem die erste Verbindung abgebaut wurde.

2. Verfahren nach Anspruch 1, **dadurch gekennzeichnet,daß** die erste Verbindung zwischen dem ersten und/oder einem weiteren Telekommunikationsendgerät (1, 7) einerseits und einer Ansageeinrichtung (5) und/oder einer weiteren Kommunikationseinrichtung des intelligenten Netzes andererseits aufgebaut wird und die zweite Verbindung zwischen dem ersten und/oder weiteren Telekommunikationsendgerät (1, 7) einerseits und dem zweiten und/oder einem weiteren Telekommunikationsendgerät (3) andererseits aufgebaut wird.

3. Verfahren nach Anspruch 1 oder 2, **dadurch gekennzeichnet, daß** das erste und/oder weitere Telekommunikationsendgerät (1, 7) über die erste Verbindung der Dienstezentrale eine erste Nachricht über den gewünschten Aufbau der zweiten Verbindung und den Abbau der ersten Verbindung sendet (S7).

4. Verfahren nach Anspruch 3, **dadurch gekennzeichnet, daß** eine zweite Nachricht Anforderungssignale zum Anfordern der übertragenen Daten und/oder der Vergleichsergebnisse oder weiterer Daten beinhaltet und von dem ersten und/oder weiteren Telekommunikationsendgerät (1, 7) an die Dienstezentrale gesendet wird.

5. Verfahren nach Anspruch 3 oder 4, **dadurch gekennzeichnet, daß** die Nachrichten im Rahmen eines von einer intelligenten Peripherie des Telekommunikationsdienstes bereitgestellten Sprachmenüs eingegeben werden.

6. Verfahren nach einem der vorangegangenen Ansprüche, **dadurch gekennzeichnet, daß** die Dienstezentrale (4) in Abhängigkeit von den Vergleichsergebnissen eine Ansagenachricht erzeugt (S4) und an die Ansageeinrichtung (5) überträgt, und die Ansageeinrichtung die Ansagenachricht an das erste und/oder weitere Telekommunikationsendgerät (1, 7) überträgt (S6).

7. Verfahren nach einem der vorangegangenen Ansprüche, **dadurch gekennzeichnet, daß** mit der Aktivierung (S1) des Telekommunikationsdienstes Zusatzinformationen, wie Kennzeichnungs- und/oder Authentifizierungsdaten des ersten und/oder weiteren Telekommunikationsendgerätes (1, 7) für den Aufbau der ersten Verbindung eingegeben werden.

8. Verfahren nach einem der Ansprüche 2 - 7, **dadurch gekennzeichnet, daß** die Nachricht bei dem ersten und/oder weiteren Telekommunikationsendgerät (1, 7) von dem Telekommunikationsdienst mittels eines Sprachspeichersystems (IVR) abgefragt wird.

9. Verfahren nach einem der Ansprüche 2 - 7, **dadurch gekennzeichnet, daß** die Nachricht durch Tastendruck auf der Tastatur des ersten und/oder weiteren Telekommunikationsendgerätes (1, 7) an die Dienstezentrale (4) signalisiert wird.

10. Telekommunikationssystem mit einer Dienstezentrale in einem intelligenten Kommunikationsnetz (IN) zur Durchführung des Verfahrens nach einem der vorangegangenen Ansprüche,
**gekennzeichnet durch**
eine erste Speichereinrichtung zur Speicherung eines für die Ausführung eines Telekommunikationsdienstes auszuführenden Anwendungsprogrammes,
eine zweite Speichereinrichtung zur Speicherung von Referenzdaten für den Telekommunikationsdienst, Empfangseinrichtungen zum Empfang von den Referenzdaten und von einem zweiten Telekommunikationsendgerät (2) übertragenen Daten,
eine Vergleichseinrichtung zum Vergleichen der übertragenen Daten mit den gespeicherten Referenzdaten,
Einrichtungen zum Auf- und Abbau einer ersten Verbindung zwischen einem ersten und/oder mindestens einem weiteren Telekommunikationsendgerät (1, 7) einerseits und einer Ansageeinrichtung (5) und/oder weiteren Kommunikationseinrichtung des intelligenten Netzes andererseits, und
Einrichtungen zum Aufbau einer zweiten Verbindung zwischen dem ersten und/oder weiteren Telekommunikationsendgerät (1, 7) einerseits und dem zweiten und/oder weiteren Telekommunikationsendgerät (3) andererseits.

11. Telekommunikationssystem nach Anspruch 10, **gekennzeichnet durch** ein Sprachspeichersystem (IVR) zum Senden einer Sprachaufforderung zur Eingabe von Nachrichten und zur Erkennung der **durch** das erste und/oder weitere Telekommunikationsendgerät (1, 7) mittels Sprache oder Tastendruck eingegebenen einen Nachricht.

12. Telekommunikationssystem nach Anspruch 11, **gekennzeichnet durch** ein Softwaremenü zur Realisierung des Sprachspeichersystems in der Dienstezentrale (4) und dem ersten und/oder weiteren Telekommunikationsendgerät (1, 7).
